Europäisches Patentamt

European Patent Office

Office européen des brevets

(11) Publication number: 0 655 606 A1

# EUROPEAN PATENT APPLICATION

(21) Application number: 94203427.3

(22) Date of filing: 24.11.94

(51) Int. Cl.6: G01D 3/028, G01L 1/22

(30) Priority: 25.11.93 NL 9302041

(43) Date of publication of application:
31.05.95 Bulletin 95/22

(84) Designated Contracting States:
DE FR GB IT NL

(71) Applicant: TEXAS INSTRUMENTS
INCORPORATED
13500 North Central Expressway
Dallas
Texas 75265 (US)

(84) DE FR GB IT

(71) Applicant: TEXAS INSTRUMENTS HOLLAND

B.V.
Kolthofsingel 8
NL-7602 EM Almelo (NL)

(84) NL

(72) Inventor: Brouwer, Theodorus G.M.
Goudenregenstraat 42
NL-7601 TJ Almelo (NL)

(74) Representative: de Bruijn, Leendert C. et al
Nederlandsch Octrooibureau
Scheveningseweg 82
P.O. Box 29720
NL-2502 LS Den Haag (NL)

(54) Temperature compensated bridge sensor amplifier.

(57) Amplifier circuit having temperature compensation for a sensor for a state variable to be measured, which amplifier circuit comprises a temperature-sensitive element at least for temperature compensation of the sensitivity, a temperature-compensation circuit for the zero point and an output amplifier connected to the sensor. Starting from the one temperature-sensitive component mentioned, a first signal conditioner for generating the desired temperature signal for the sensitivity compensation is connected to the sensor and a second signal conditioner for generating the desired temperature signal for the zero-point compensation is connected to the output amplifier. The sensor may be a bridge sensor having one or more resistors which are sensitive to the state variable. The first input of the first signal conditioner is connected to a tapping point of a first resistor divider connected in series with the temperature-sensitive component across the first and second terminals of the supply voltage and the second input is connected to a reference voltage which is tapped off from a second voltage divider connected across the terminals of the supply voltage. The first input of the second signal conditioner is connected to the tapping point mentioned or to the output of the first signal conditioner and the second input is connected to the reference voltage mentioned.

fig-1

The invention relates to an amplifier circuit having temperature compensation for a sensor for measuring a state variable, which amplifier circuit comprises a temperature-sensitive element at least for temperature compensation of the sensitivity, a temperature-compensation circuit for the zero point, and an output amplifier connected to the sensor. Such an amplifier circuit with sensor is disclosed, for example, in EP 0 239 094 B1.

With the developments in microelectronic technology, sensors have been manufactured with improved design and low cost, while still providing improved performance. Such sensors are therefore being used increasingly for the measurement of pressure, acceleration, speed and the like, in conjunction with a subsequent signal conversion. In this connection, the dependence on temperature is important and a temperature compensation feature has to be used in virtually every practical application. In particular, in modern motor-vehicle control systems, bridge sensors would have to be able to function over a wide temperature range and with great accuracy.

The sensor amplifier circuit disclosed in the abovementioned European patent specification has a temperature-sensitive element in series with the sensor. In accordance with the linearity of its characteristic, said element will ensure that the sensitivity characteristic for the sensor is compensated for over the temperature range. Furthermore, a zero-point adjustment with temperature compensation of the sensor is achieved with the aid of a resistance circuit which is connected to an amplifier at the output of the sensor and comprises a temperature-sensitive element. This known circuit, however, has been found to be difficult to calibrate due to the mutual influencing of the adjustment elements. Typically, an iterative adjustment process is required because a compromise is made between the linearity of its temperature behaviour and the temperature coefficient. Furthermore, separate temperature-sensitive elements are required in this known circuit for sensitivity compensation and for zero-point adjustment compensation.

An object of the invention is to obviate the abovementioned problems and to provide a sensor amplifier circuit having temperature compensation for a state variable, in which amplifier circuit the sensitivity compensation and the zero-point adjustment compensation are effected separately from one another and require only one temperature sensitive element.

Another object of the invention is also to provide an amplifier circuit of this type which is economical to manufacture in mass production with known standard components in a modular construction.

In an amplifier circuit of the type mentioned in the preamble, this is achieved, according to the invention, in that starting from the one temperature-sensitive element mentioned, a first signal conditioner for generating the desired temperature signal for the sensitivity compensation is connected to the sensor and a second signal conditioner for generating the desired temperature signal for the zero-point compensation is connected to the output amplifier. The influence of the characteristic of the temperature-sensitive element, and linearization thereof, is advantageously separated from the voltage supply or current supply of the bridge sensor , i.e. scaling or matching to the required temperature coefficient, as a result of this design in accordance with the invention. The calibration at two temperatures can also be achieved much better with this circuit than in the case of the prior art.

The invention will be explained in greater detail on the basis of an exemplary embodiment with reference to the drawings, in which:

Figure 1 shows a basic circuit diagram of the amplifier circuit according to the invention;

Figure 2 shows a variant of the basic circuit diagram of Figure 1;

Figure 3 shows a circuit diagram of an exemplary embodiment of the amplifier circuit according to the invention;

Figures 4a to 4e show, respectively, graphs for the purpose of illustrating the method of adjusting the circuit in Figure 3; and

Figure 5 shows a variant of the circuit of Figure 3.

The abovementioned circuit of present invention may be used with a simple sensor element, or also with a micro-machined bridge sensor based on silicon technology. The bridge sensor comprises, as is usual, a Wheatstone bridge having four piezoresistive elements which are implanted in a silicon membrane. However, the bridge sensor may also be equipped with thick-film resistors, strain gauges, NTC or PTC elements, band-gap diodes or other resistance elements which are sensitive to a state variable. Such a sensor may be supplied either with current control or with voltage control. If used as a pressure sensor, the bridge will alter its differential output signal as a function of the membrane deflection effected by the pressure exerted. As stated earlier, the bridge response will be influenced not only by the material properties and the mounting of the sensor, but, also, by the temperature dependence of the piezoelectric properties of the resistors.

By way of example a voltage will be supplied to the bridge instead of current. If the change in the resistance due to the piezoelectric effect is dR, with a voltage supply to the bridge, the output signal will be defined by

$$\Delta Vout = (dR/R) \cdot Vb,$$

where Vb is the bridge voltage and R is the resistance value if no voltage is applied. Measurements have shown that the resistance value R of a standard piezoelectric resistor is strongly nonlinear with temperature. As a result of supplying the bridge with a voltage, when pressure is applied, a pressure/voltage conversion is obtained which eliminates the nonlinear temperature effect of the actual resistance value. The resistance change dR due to the piezoelectric effect can always be described as part of the non-pressure-loaded resistance (R). The nonlinearity of the resistance value with temperature is eliminated by the division. Use is therefore advantageously made of this voltage control.

It is known that two parameters are of great importance in bridge sensors of this type: the offset or deviation with respect to the zero-point adjustment and the sensitivity. The offset represents the output voltage of the bridge sensor if no input pressure is exerted. If the temperature varies over the entire temperature range to be monitored, this offset will vary. The sensitivity is also temperature-dependent, i.e. the output voltage of the bridge will change for the same change in pressure and with variation in temperature. This temperature-dependent pressure sensitivity of the bridge proceeds fairly linearly and can be compensated for satisfactorily with the aid of, for example, a temperature-sensitive element.

The supply voltage of the bridge is controlled over the entire temperature range using, as reference, a resistor divider comprising a temperature-sensitive element such as a negative temperature coefficient (NTC) or positive temperature coefficient (PTC) element and a fixed resistor having a resistance value chosen optimally for the purpose of an optimum linearity (better than 1%). In this way, the ratiometric supply character of a circuit of this type is also maintained. Downstream of the bridge sensor, an analog to digital (A/D) converter is generally used, with the supply voltage of the circuit as reference, in order to convert the analog signal into a digital signal. If the bridge sensor having the temperature-sensitive element in series is ratiometric with respect to the supply voltage, a greater accuracy in pressure information will be obtained if variations occur in the supply voltage.

The use of a temperature-sensitive element in the voltage divider of the supply voltage has the advantage that a second temperature-sensitive element for the temperature compensation of the zero-point adjustment is unnecessary since this temperature signal can be derived from the same voltage divider.

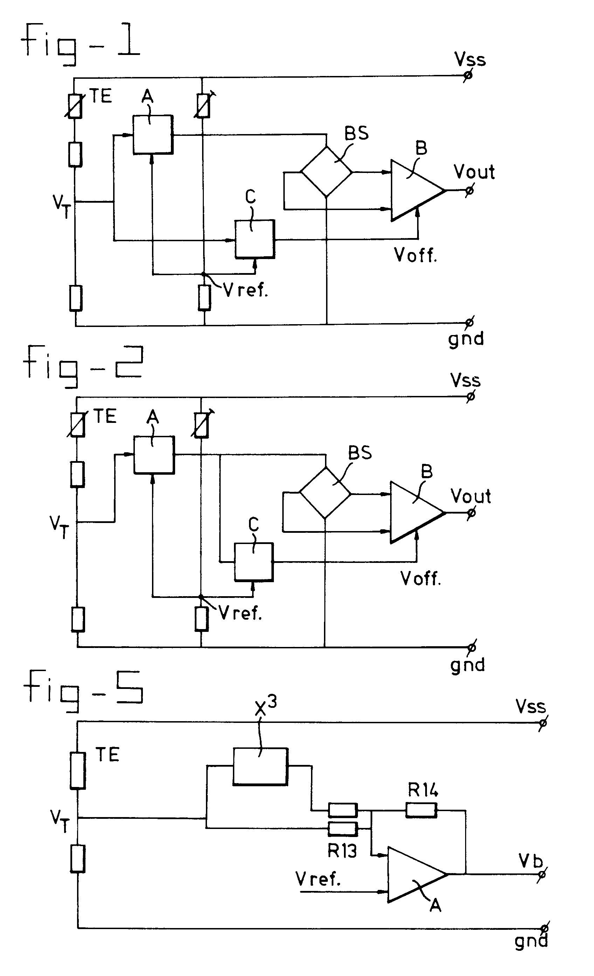

The amplifier circuit according to the invention shown in the basic diagram of Figure 1 contains two signal conditioners A and C, the sensor BS and an output amplifier B designed as differential amplifier. Both the first signal conditioner A and the second signal conditioner C are connected, by means of the first input, to a tapping point $V_T$ of a resistor divider incorporated in series with a temperature-sensitive element TE and, by means of the second input, to a tapping point Vref. of a second voltage divider between the terminals Vss and gnd of the supply voltage. The two inputs of the output amplifier B are connected to the opposite outputs of the sensor BS, which is designed as a bridge sensor. The output of the first signal conditioner A is connected to the bridge sensor BS and the output of the second signal conditioner C is connected to the output amplifier B. A great advantage of this design is that both signal conditioners A and C can each have a particular transfer characteristic without affecting one another.

In a variant, shown in Figure 2, of the amplifier circuit according to the invention, the first input of the second signal conditioner C is connected to the output of the signal conditioner A generally for use in the case, for example, where a portion of the desired transfer characteristic of C is already contained in the transfer characteristic of A. In other respects, this amplifier circuit is identical to that of Figure 1.

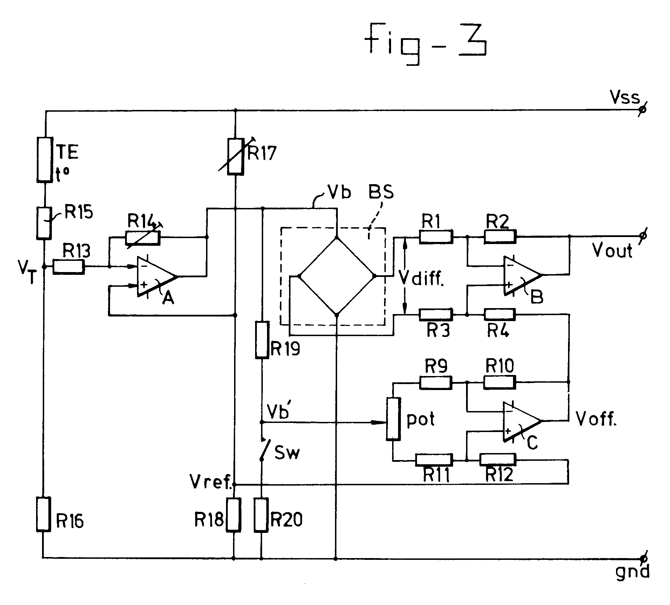

The circuit shown in Figure 3 is a detailed elaboration of the basic circuit diagram of Figure 2. Via a resistor R13, the signal conditioner A is connected by means of the first input to a voltage divider comprising the temperature-sensitive element TE and the resistors R15 and R16. The signal conditioner A is used to generate the desired bridge voltage Vb having the temperature compensation required for the sensitivity. That is to say, a change of scale or scaling is derived from the supply voltage available at the temperature-sensitive element in order to obtain said bridge voltage Vb. The sum of the resistors R15 and R16 is selected for an optimum linearity of the thermal voltage $V_T$ and the ratio of R14 and R15 determines the absolute value of $V_T$. The output of the signal conditioner A is connected to the first input of the bridge sensor and also via a voltage divider R19, R20 to the signal conditioner C. The second input of A is connected to a voltage divider formed by the resistors R17 and R18. The voltage Vref. is available at the tapping point between the two resistors. As a result of the use of the signal conditioner A connected in this way, a separation is obtained between the linearization of the temperature-sensitive element and the scaling of the supply voltage to the bridge sensor. As a result, the two can be adjusted independently of one another. The bridge voltage is equal to

$$Vb = Vref. + a_A (V_T - Vref.),$$

where $a_A$ is the gain of the amplifier A.

Connected to the two opposite outputs of the bridge sensor BS are the first and second inputs of an amplifier B, which may be followed by a further amplifier, which is not shown. Both amplifiers may be standard instrumentation amplifiers. The amplifier B functions as a preamplifier stage having common-mode rejection. This is necessary because the common-mode voltage is now temperature-dependent as a consequence of the temperature-dependent bridge voltage. The common-mode rejection is achieved if the two branches are balanced, i.e.

$$R2/R1 = R4/R3 = a_B \rightarrow \text{amplification of the differential signal.}$$

The output voltage of B is $Vout = a_B \cdot \text{diff.} + Voff.$, where $a_B$, diff. and Voff. are, respectively, the gain of B, the differential output voltage of the bridge sensor and the output voltage of C.

If a bridge sensor circuit, such as a silicon bridge, having a sufficiently high output signal is used, said amplifier B may be an operational amplifier of the standard type since this stage is not sensitive to offset errors as a consequence of the relatively high output signal of the bridge.

The signal conditioner C comprises a differential amplifier whose output is connected to an input of the amplifier B. The two inputs of C are connected via a voltage divider comprising R9, pot, R11. In the case of a two-point calibration, i.e. at two temperatures, the controllable tapping point of the voltage divider is connected to the supply voltage Vb of the bridge sensor and, in the case of a single-point calibration, i.e. at one temperature, it is connected to the tapping point of a voltage divider R19, R20 between Vb and ground. The selection between these two calibration possibilities with the aid of a switch Sw is indicated in the drawing. The top (R9) of the voltage divider is also connected via a resistor R10 to the output of this amplifier. The bottom (R11) of the voltage divider is connected via a resistor R12 to the reference voltage Vref. of the tapping point between the resistors R17 and R18.

The signal conditioner C is used for the zero-point adjustment or elimination of the offset and temperature compensation of the offset of the bridge sensor. The transfer of this signal conditioner can be changed by altering, for example, the resistor R11. If, for example, R11 is made = 0, C will function as a follower and there will be no voltage across R9, as a result of which Vout = Vb'.

If the resistor R11 has a high value, C will function as an inverter having high gain adjusted by the resistors R9 and R10. To summarize, it is the case for the gain $a_C$ that - high $< a_C < 1$. This is an important property since the offset may be either positive or negative.

As a result of using the bridge voltage Vb instead of $V_T$ as derived input signal, the temperature coefficient of Voff. can easily be determined. The transfer equation for said signal conditioner C can be simplified to:

$$Voff. = Vref. \cdot (1 - a_C) + a_C \cdot Vb = Vref. + a_C \cdot (Vb - Vref.)$$

where $a_C = (R12 \cdot R9 - R10 \cdot R11) / (R12 \cdot R9 + R9 \cdot R11)$.

This signal conditioner will be sensitive to offset errors of the operational amplifier as a consequence of the usually small offset voltages which have to be compensated for in the circuit. Since the offset compensation is carried out downstream of the preamplifier B, the offset problems can be reduced somewhat by giving the preamplifier B an appreciable gain.

The complete circuit now combines the possibility of temperature calibration over a wider temperature range with the possibility of calibration for mean temperature coefficients in a smaller range or with a smaller required accuracy. For the purpose of temperature calibration over a wider range, the present circuit will make it possible to recalibrate the sensor at a second temperature with the switch Sw in the open position without changing those adjustments ($V_T = Vref.$) made at the first temperature with the aid of R17. After all, Vb and Voff. are then independent of $a_A$ and $a_C$, respectively, and corrections can therefore be carried out at the second temperature without changing the behaviour at the first temperature. For the purpose of calibrating mean temperature coefficients with the switch Sw in the closed position, preference is given to simple transfer functions which produce predictable temperature coefficients and easily calculated voltage calibration.

The temperature coefficient variations of the signal conditioners A and C can be predicted by assuming the relatively simple equations specified above. This makes a calibration possible for calculated voltages at the various points in the circuit. Proceeding from the fact that the inherent offset temperature dependence of the sensor is small, this results in an excellent behaviour of the circuit; the temperature dependence of the offset is determined by the bridge voltage. Since the offset compensation is also derived from the bridge voltage, the compensated final result can be just as good as is made possible by the calibration resolution.

The resultant behaviour of the circuit will mainly comprise gradient errors due to deviations in the sensitivity compensation of the sensor with respect to the mean value. As a percentage of the full scale deflection, the error will therefore be smaller for lower pressures than for higher pressures, which is a desirable property for certain functions, such as warning at low pressure.

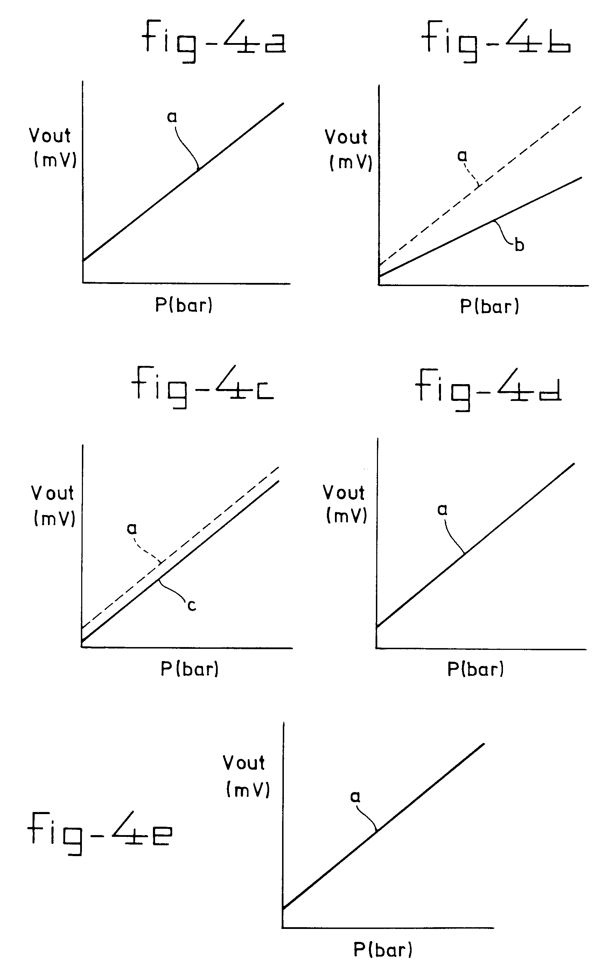

The calibration for the circuit for a wider temperature range will be explained below with reference to Figures 4a to 4e, the switch Sw being open for this two-point calibration or the resistor R20 being omitted in its entirety.

Figure 4a shows as an example a characteristic of the output voltage of the bridge sensor Vout (in mV) with respect to the pressure P (in bar).

At a first temperature T1 at the bottom of the desired temperature range, the resistor R17 of the resistor divider R17, R18 is adjusted so that Vref. is equal to $V_T$. It is then the case that Vb = Vb' = Voff. = $V_T$ = Vref. After this adjustment, it is possible to be certain that neither the bridge voltage Vb nor the offset-compensation voltage Voff. will change in the event of alterations in the gain of the signal conditioners A and C (except for some small effects induced by an amplifier offset). The output voltages of said signal conditioners are both equal to $V_T$. The resistors R15 and R16 are used to set the desired bridge voltage at this temperature with adequate scope for alteration in voltage at other temperatures. The required gain and, consequently, a certain slope in accordance with the curve a in Figure 4a is now set with the aid of separate adjustments in the actual amplifier B.

In addition to the desired curve a, which is shown as a broken line, Figure 4b shows an actual curve b which is due to the temperature effects and has to be corrected. The required slope or sensitivity is set as shown by the curve c in Figure 4c by adjusting the gain in A with the resistor R14 at a second temperature T2 at the other end of the temperature range. The zero point is furthermore adjusted in C by adjusting the resistors R9 and R11 at said second temperature T2, with the result that the desired curve is reproduced, as shown in Figure 4d.

With the exception, possibly, of a few small errors due to amplifier offsets, the original curve a will now be obtained again, as shown in Figure 4c, by returning to the first temperature T1. Here it is the case that

Vb = Vb' = Voff. = $V_T$ = Vref.

A problem which still occurs in practice is a residual error due, on the one hand, to the nonlinearity of the temperature-sensitive element (mainly 3rd-order power) and, on the other hand, due to the mathematical principle of the compensation employed (namely, 2nd-order power). From measurements of, inter alia, the thermal voltage $V_T$, it has been found that said nonlinearity has an S shape because the temperature-sensitive element has a third-order error in its characteristic. Said error can be eliminated by adding a correctly scaled third-order thermal voltage to the bridge voltage Vb. This is shown in Figure 5, in which a correction network $X^3$ has been incorporated in the input circuit to the signal conditioner A. Calculations have shown that a 20-fold reduction in the linearity error can be achieved thereby. The third-order correction does not necessarily have to be made with high accuracy.

An outstanding temperature behaviour with an accuracy of better than ± 2% can be obtained with the abovementioned circuit for a large temperature range, for example from approximately -40 °C to 125 °C. The bridge sensor may advantageously be used for many applications, such as for measuring (oil) pressure, accelerations, etc.

## Claims

1. Amplifier circuit having temperature compensation for a sensor for measuring a state variable, which amplifier circuit comprises a temperature sensitive element at least for temperature compensation of the sensitivity, a temperature-compensation circuit for the zero point, and an output amplifier connected to the sensor, characterized in that, starting from the one temperature-sensitive element (TE) mentioned, a first signal conditioner (A) for generating the desired temperature signal for the sensitivity compensation is connected to the sensor and a second signal conditioner (C) for generating the desired temperature signal for the zero-point compensation is connected to the output amplifier (B).

2. Amplifier circuit according to claim 1, wherein the temperature-sensitive element (TE) is chosen from the group consisting of NTC elements, PTC elements, linear elements and band-gap diodes.

3. Amplifier circuit according to claim 1, wherein the said first and second signal conditioners (A, C) have a transfer characteristic of any desired form, such as second or third order, look-up table, etc.

4. Amplifier circuit according to claim 1, wherein the sensor comprises a bridge sensor (BS) having one or more resistors which are sensitive to the state variable.

5. Amplifier circuit according to claim 4, wherein voltage control is used to supply the bridge sensor.

6. Amplifier circuit according to claim 4, wherein current control is used to supply the bridge sensor.

7. Amplifier circuit according to claim 1, wherein a first input of the first signal conditioner (A) is connected to a tapping point ($V_T$) of a first resistor divider (R15, R16) which is connected in series with the temperature-sensitive element (TE) across first (Vss) and second (gnd) terminals of the supply voltage and a second input is connected to a reference voltage (Vref.) which is tapped off from a second voltage divider (R17, R18) connected across the first and second terminals (Vss, gnd) of the supply voltage.

8. Amplifier circuit according to claim 7, wherein a first input of the second signal conditioner (C) is connected to the tapping point ($V_T$) and the second input is connected to the reference voltage (Vref.).

9. Amplifier circuit according to claim 7, wherein a first input of the second signal conditioner (C) is connected to the output (Vb) of the first signal conditioner (A) and a second input is connected to the reference voltage (Vref.).

10. Amplifier circuit according to claim 8 or 9, wherein a third voltage divider (R9, pot, R11) is connected across the two inputs of the second signal conditioner (C), one tapping point of said third voltage divider forming the connection for the first input.

11. Amplifier circuit according to claim 7, wherein a fourth voltage divider (R19, R20) is connected between the output of the first signal conditioner (A) and the second terminal (gnd) of the supply voltage, one tapping point (Vb') of said fourth voltage divider being connected to the said first input of the second signal conditioner (C).

12. Amplifier circuit according to claim 4, wherein the opposite outputs of the bridge sensor (BS) are connected to the first and second inputs of the output amplifier (B), which is designed as differential amplifier, and wherein the output of the second signal conditioner (C) is connected to the second input of the output amplifier (B).

13. Amplifier circuit according to claim 2, wherein a third-order correction network ($X^3$) is connected in the input circuit of the first input of the first signal conditioner (A) in order to correct third-order nonlinearities of the temperature-sensitive element (TE).

14. Amplifier circuit according to claim 2, wherein at least one resistor component (R17) of the second voltage divider (R17, R18) is adjustable so that the voltage at the tapping point (Vref.) at a first temperature (T1) near one end of the temperature range used is equal to the voltage ($V_T$) at the temperature-sensitive element.

15. Amplifier circuit according to claim 2, wherein the first signal conditioner (A) has a feedback resistor (R14) in order to adjust the sensitivity of the bridge sensor (BS) at a second temperature (T2) near the other end of the temperature range used.

16. Amplifier circuit according to claims 9 and 15, wherein the tapping point of the third voltage divider (R9, pot, R11) across the inputs of the second signal conditioner (C) is separately adjustable at the said second temperature (T2) in order to adjust the zero point of the bridge sensor.

17. Amplifier circuit having temperature compensation for a sensor according to one of the preceding claims for use in the measurement of pressure.

Fig-1

Vss

TE

A

BS

B

Vout

C

Vref.

Voff.

V_T

gnd

Fig-2

Vss

TE

A

BS

B

Vout

C

Vref.

Voff.

V_T

gnd

Fig-5

X3

Vss

TE

R14

V_T

R13

Vb

Vref.

A

gnd

Fig-3

# fig-4a

Vout (mV)

a

P(bar)

# fig-4b

Vout (mV)

a

b

P(bar)

# fig-4c

Vout (mV)

a

c

P(bar)

# fig-4d

Vout (mV)

a

P(bar)

# fig-4e

Vout (mV)

a

P(bar)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 048 343 (OBOODI ET AL.)<br>* column 1, line 7 - column 3, line 68 *<br>--- | 1-4,6,17 | G01D3/028<br>G01L1/22 |
| Y | UND-ODER-NOR + STEUERUNGSTECHNIK,<br>vol.14, no.10, 1984, MAINZ,DEUTSCHLAND<br>pages 28 - 29<br>DONALD G. LYNAM 'Intergrierter Drucksensor mit Verstärkungs-Programmierung'<br>* page 28, right column, line 30 - page 29, left column, line 23; figure 2 *<br>--- | 1-4,6,17 | |
| A | BOSCH TECHNISCHE BERICHTE,<br>no.52, October 1990, STUTTGART, DE<br>pages 30 - 41, XP000177040<br>HEINTZ ET AL. 'Einsatzmöglichkeiten und Zukunftschancen "intelligenter" Sensoren im Kraftfahrzeug'<br>* figures 13,A,13B *<br>----- | 1-6,17 | |
| | | | **TECHNICAL FIELDS SEARCHED** (Int.Cl.6)<br><br>G01D<br>G01L |

The present search report has been drawn up for all claims

| Place of search | Date of completion of the search | Examiner |
|---|---|---|
| THE HAGUE | 15 February 1995 | Lut, K |